# EUROPEAN PATENT APPLICATION

(11) **EP 2 696 476 A1**
(43) Date of publication of application: **12.02.2014**
(21) Application number: 11863204.1
(22) Date of filing: 05.04.2011
(51) Int. Cl.: H02K 3/28

(54) **STATOR AND MANUFACTURING METHOD FOR STATOR**

(71) Applicant: Toyota Jidosha Kabushiki Kaisha, Toyota-shi, Aichi 471-8571 (JP)
(72) Inventor: KITAMURA Manabu, Toyota-shi Aichi 471-8571 (JP); WATANABE Atsushi, Toyota-shi Aichi 471-8571 (JP)
(74) Representative: Albutt, Anthony John
(86) International application number: PCT/JP2011/058619
(87) International publication number: WO 2012/137306

(57) **Abstract**

The present invention provides a stator capable of reducing the height of the coil end. A stator (100) comprises a concentric wound coil (C) formed by winding a straight angled conductor (D), and a segmented stator core (110) provided with a slot (SL) and teeth (112). The concentric wound coil (C) is formed by being concentrically wound, and has a first concentric wound coil (C1) and a second concentric wound coil (C2) having a space (S) between wound rectangular conductors (D), into which a rectangular conductor (D) can be inserted. In the slot (SL), slot internal conducting wires (C11) of the first concentric wound coil (C1) and slot internal conducting wires (C11) of the second concentric wound coil (C2) are alternately disposed, and a lane changing section formed on the coil end is formed in such a way to make a displacement by the thickness of one straight angled conductor (D) used in the second concentric wound coil (C2).

## Description

### TECHNICAL FIELD

The present invention relates to a stator and a method for manufacturing the stator and more particularly to a technique of an improved method for winding a coil to shorten an axial height of a coil end of a stator to be used in a motor.

### BACKGROUND ART

Recently, as demands for a hybrid vehicle, an electric vehicle, etc. are increased, there are increasingly cases where motors are mounted as power sources of those vehicles. A hybrid vehicle using an engine and a motor in combination needs to install both the engine and the motor in an engine room. This results in a high demand for a compact-sized and high-power motor.

In a conventional case, a high-power motor is rarely mounted in a vehicle. If such a high-power motor is mounted in a vehicle, many problems specific to a vehicle-mounted motor may occur. Accordingly, various techniques in development of hybrid vehicles and electric vehicles are currently studied.

Patent Document 1 discloses a technique related to a rotary electric machine, a crank-shaped continuous winding coil, a distributed winding stator, and a method for forming them. A flat rectangular wire is wound on a hexagonal bobbin, this wire is formed with a cranked-portion by use of a die, and a formed coil is placed in a stator core. This technique enables formation of the crank-shaped coil so that vertex portions at both ends placed at coil ends of a coil are displaced by the total width of wound wire portions and by a length within a range of an interval of adjacent slots. This can provide a shortened coil end of a stator, contributing to a reduction in size of a motor.

Patent Document 2 discloses a technique related to a rotary electric machine and a manufacturing method thereof. This rotary electric machine includes a stator core having a plurality of teeth and a stator slots formed between the teeth, on which a coil is wound, and a plurality of coil assemblies wound on each pair of the stator slots by skipping some teeth to form a coil configured as a distributed winding. One in-slot conductor wire portions of each coil assembly are inserted on an outer layer side of a slot while the other in-slot wire portions are inserted on an inner layer side of the slot. The coil assemblies used herein are of nearly the same shape. The above configuration simplifies a manufacturing work of the rotary electric machine.

Patent Document 3 discloses a technique of a stator of a rotary electric machine. This stator includes a fixed core having a plurality of slots in a circumferential direction and stator windings formed by connecting a plurality of segment conductors, each having two slot conductors placed in different slots in a circumferential direction and turn parts connecting the slots conductors outside the slots. When the number of the slot conductors placed in a row in a radial direction in each slot is assumed as Nc, a relation of 6 ≤ Nc is set. When the slot conductors placed in a row in the radial direction in each slot are referred to as a 1^{st} layer, 2^{nd} layer, ...Nc^{th} layer from inside to outside in the radial direction of each slot, three segment conductors in which the slot conductors are placed in two slots different in position in the circumferential direction are set so that respective two slot conductors are located in a k (1 ≤ k ≤ Nc - 5, two or more values are taken if 12 ≤ Nc) layer and a (k+2) layer, in a (k+3) layer and a (k+5) layer, and in a (k+1) layer and a (k+4) layer. This configuration can reduce the height of coil ends of a stator.

Patent Document 4 discloses a technique about a stator of a rotary electric machine. This stator of a rotary electric machine includes a stator core having a plurality of slots in a circumferential direction and a stator winding made of wires and placed in the slots. The stator winding includes slot-housing portions placed in different slots in the circumferential direction and turn portions placed outside the slots to connect the slot housing portions. The turn portions protruding from the slots are each formed with a step portion parallel to the end face of the stator core. The stator core consists of a plurality of split core parts insertable in the stator winding in the radial direction. The stator winding is formed of the plurality of split stator windings connected to each other. This configuration can reduce the height of coil ends of the stator.

Patent Document 5 discloses a technique of an AC generator including a stator and stator winding formed of winding elements inserted in stator grooves, and a stator manufacturing method according to the invention. This relates to an AC generator. It includes a rotor having an N pole and an S pole, and a stator having a magnetic core provided with slots and a coil placed in the slots of the core. The coil has winding heads, which are cooled by air flow in a radial direction generated by a fan attached to the rotor. The stator faces the rotor so that the stator and the rotor are positioned in place with respect to each other as prescribed. A multi-layer coil consists of coils, at least one of which includes two or more sections inserted in the slots and at least one of which includes one or more reversal section to change the position in the radial direction. This facilitates manufacture of the coil.

### RELATED ART DOCUMENTS

### PATENT DOCUMENTS

Patent Document 1: JP 2008-104293A
Patent Document 2: JP 2008-125212A
Patent Document 3: JP 2008-245489A
Patent Document 4: JP 2009-011152A
Patent Document 5: JP 2010-531127A

### SUMMARY OF INVENTION

### PROBLEMS TO BE SOLVED BY THE INVENTION

However, when the motor or motor stator is to be formed by techniques disclosed in Patent Documents 1 to 5, the following problems may be caused.

Patent Document 1 adopts a wave winding coil. For lane changing, the coil end portions are formed in stepwise shape to bypass or detour around the other flat rectangular wires. In Patent Document 2, the coil end portions are formed in angular shape and the flat rectangular wires are apparently twisted for lane changing. Patent Documents 3 to 5 each adopt the configuration that the flat rectangular wires are overlapped or stacked in the axial direction of the stator core. This causes a problem in each method that increasing of the number of turns of the flat rectangular wire results in an increased height of the coil ends of the stator.

To increase output power of the motor, it is necessary to study increasing the number of turns of a coil used in a stator. This may cause a large influence on the height of the coil end even if the cross sectional area of the flat rectangular wire is increased. This interferes with the size reduction of a motor and is not preferable for a vehicle-mounted motor demanded for size reduction and power increase.

The present invention has been made to solve the above problems and has a purpose to provide a stator and a method for manufacturing the stator, achieving a reduced height of a coil end.

### MEANS OF SOLVING THE PROBLEMS

To achieve the above purpose, one aspect of the invention provides a stator configured as below.

(1) In a stator including: coils each made of a conductor wire wound to form in-slot wire portions and coil-end wire portions; and a split-type stator core including slots receiving the in-slot wire portions and teeth parts formed adjacent to the slots, the coils includes: a first concentrically wound coil formed in a concentric winding shape to have gaps between adjacent portions of the wound conductor wire to allow insertion of the conductor wire; and a second concentrically wound coil wound as with the first concentrically wound coil, wherein the in-slot wire portions of the first concentrically wound coil and the in-slot wire portions of the second concentrically wound coil are alternately arranged in each slot, and a lane-change portion is formed in the coil-end wire portion of the first concentrically wound coil to bypass an area corresponding to a width of one conductor wire used for the coil-end wire portion of the second concentrically wound coil.

To achieve the above purpose, another aspect of the invention provides a stator manufacturing method configured as below.

(2) In a method for manufacturing a stator by winding conductor wires to form coils each including in-slot wire portions and coil-end wire portions, arranging the coils to form a cage-shaped coil, inserting a split-type stator core including teeth parts and slots into the cage-shaped coil to form a nearly annular stator, wherein the method includes: forming the coil in a concentric winding shape to have gaps between adjacent portions of the conductor wire to allow insertion of another one of the conductor wires, and forming lane-change portions in the coil-end wire portions to bypass an area corresponding to a width of one conductor wire; forming an annular cage-shaped coil from the coils so that in-slot wire portions of a first concentrically wound coil and in-slot wire portions of a second concentrically wound coil placed adjacent to the first concentrically wound coil are inserted in mutual gaps and alternately arranged; and inserting the teeth parts of the stator core in the cage-shaped coil from an outer periphery side of the cage-shaped coil to form the stator.

### EFFECTS OF THE INVENTION

The stator configured as above can provide the following operations and effects.

According to the above aspect (1), in the stator including: coils each made of a conductor wire wound to form in-slot wire portions and coil-end wire portions; and a split-type stator core including slots receiving the in-slot wire portions and teeth parts formed adjacent to the slots, the coils includes: a first concentrically wound coil formed in a concentric winding shape to have gaps between adjacent portions of the wound conductor wire to allow insertion of the conductor wire; and a second concentrically wound coil wound as with the first concentrically wound coil, wherein the in-slot wire portions of the first concentrically wound coil and the in-slot wire portions of the second concentrically wound coil are alternately arranged in each slot, and a lane-change portion is formed in the coil-end wire portion of the first concentrically wound coil to bypass an area corresponding to a width of one conductor wire used for the coil-end wire portion of the second concentrically wound coil.

Accordingly, the lane-change portions provided in the coil-end wire portions of the stator are formed so as to bypass or detour around an area corresponding to the width of one wire. The first concentrically wound coil and the second concentrically wound coil are designed so that respective in-slot wire portions are alternately arranged in each slot of the stator core. Further, the first and second concentrically wound coils are wound in the same shape. Accordingly, there is no need to form the lane-change portion so as to bypass two or more wires in the lane-change portion. Since the space is generated in the radial direction of the stator, the coil-end wire portions can be made compact even when the number of coil turns is increased. In other word, a stator easy in assembling and short in height of the coil ends in the axial direction can be achieved.

The stator manufacturing method configured as above can provide the following operations and effects.

According to the above aspect (2), in the method for manufacturing a stator by winding conductor wires to form coils each including in-slot wire portions and coil-end wire portions, arranging the coils to form a cage-shaped coil, inserting a split-type stator core including teeth parts and slots into the cage-shaped coil to form a nearly annular stator, the method includes: forming the coil in a concentric winding shape to have gaps between adjacent portions of the conductor wire to allow insertion of another one of the conductor wires, and forming lane-change portions in the coil-end wire portions to bypass an area corresponding to a width of one conductor wire; forming an annular cage-shaped coil from the coils so that in-slot wire portions of a first concentrically wound coil and in-slot wire portions of a second concentrically wound coil placed adjacent to the first concentrically wound coil are inserted in mutual gaps and alternately arranged; and inserting the teeth parts of the stator core in the cage-shaped coil from an outer periphery side of the cage-shaped coil to form the stator.

Accordingly, as with the stator described in (1), the coil ends of the stator to be used in a motor are designed so that the lane-change portions provided in the coil-end wire portions are formed to bypass or detour around an area corresponding to the thickness of one wire. The first concentrically wound coils and the second concentrically wound coils are designed so that respective in-slot wire portions are alternately arranged in each slot of the stator core. Thus, there is no need to form the lane-change portion portions so as to bypass two or more wires. This makes it possible to provide the stator manufacturing method whereby the coil-end wire portions of the stator can be made compact.

### BRIEF DESCRIPTION OF THE DRAWINGS

FIG 1 is a perspective view of a stator in an embodiment;
FIG 2 is a top view of the stator in the embodiment;
FIG 3 is a side view of the stator in the embodiment;
FIG 4 is a perspective view of a cage-shaped coil ("cage coil") in the embodiment;
FIG 5 is a side view of the cage coil in the embodiment;
FIG 6 is a top view of the cage coil in the embodiment;
FIG 7 is a front view of a concentrically wound coil in the embodiment;
FIG 8 is a side view of the concentrically wound coil in the embodiment;
FIG 9 is a top view of the concentrically wound coil in the embodiment;
FIG 10 is a cross sectional view showing a state where the concentrically wound coil is inserted in a stator core in the embodiment;
FIG. 11 is a front view showing a state where first and second concentrically wound coils are overlapped in the embodiment;
FIG 12 is a side view showing a state where the first and second concentrically wound coils are overlapped in the embodiment;
FIG 13 is a top view showing a state where the first and second concentrically wound coils are overlapped in the embodiment;
FIG 14 is a front view showing a state where six concentrically wound coils are overlapped in the embodiment;
FIG 15 is a side view showing a state where the six concentrically wound coils are overlapped in the embodiment;
FIG 16 is a top view showing a state where the six concentrically wound coils are overlapped in the embodiment;
FIG 17 is a front view showing a state where the concentrically wound coils of the same phase are arranged in the embodiment;
FIG 18 is a side view showing a state where the concentrically wound coils of the same phase are arranged in the embodiment;
FIG 19 is a top view showing a state where the concentrically wound coils of the same phase are arranged in the embodiment;
FIG 20 is a perspective view showing how to insert core pieces in the cage coil in the embodiment;
FIG 21 are perspective view showing how to fit an outer ring on the outer periphery of the stator core in the embodiment;
FIG 22 is a perspective view of the stator in the present embodiment; and
FIG 23 is a side view showing how to insert the rotor to a motor in the embodiment.

### MODE FOR CARRYING OUT THE INVENTION

A detailed description of a preferred embodiment of the present invention will now be given referring to the accompanying drawings.

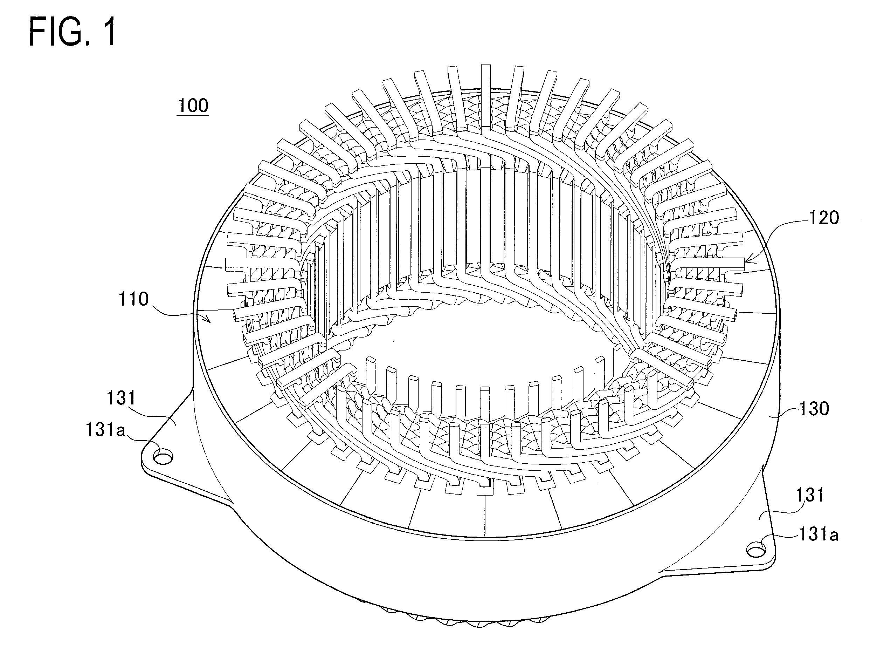

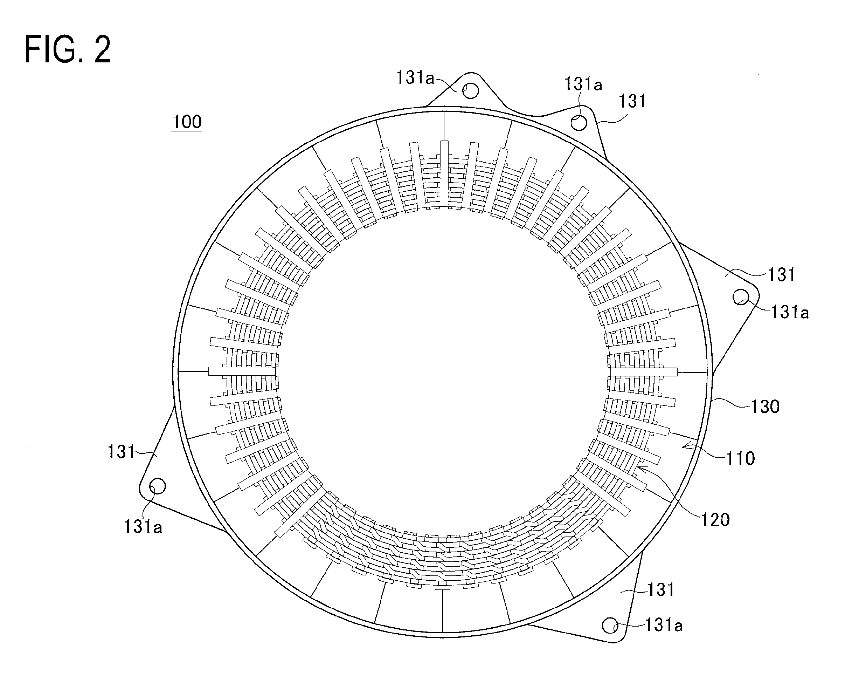

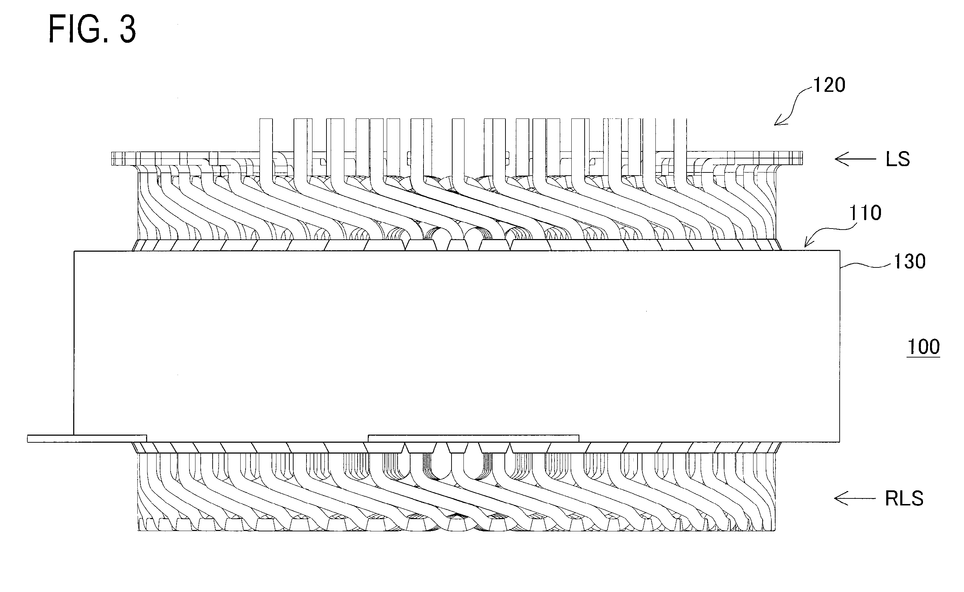

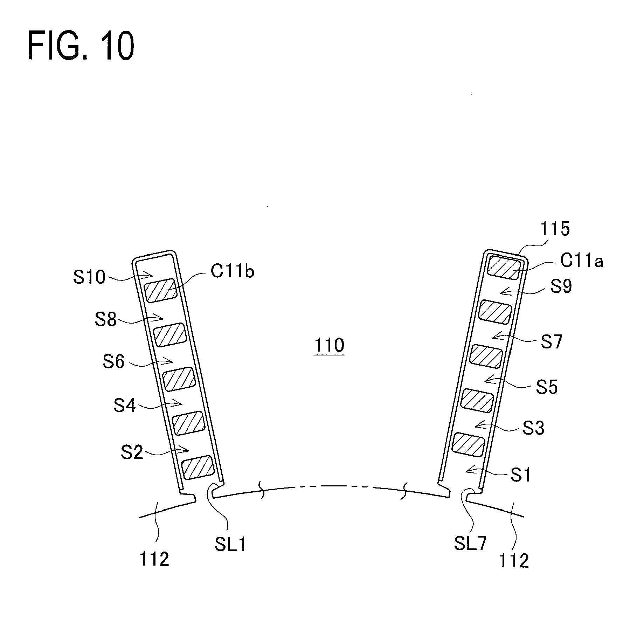

FIG 1 is a perspective view of a stator 100 in the present embodiment. FIG 2 is a top view of the stator 100. FIG 3 is a side view of the stator 100. The stator 100 includes a stator core 110, a cage-shaped coil ("cage coil") 120, and an outer ring 130. The stator core 110 is a split type core consisting of core pieces 111 arranged in an annular shape. Each of the core pieces 111 is formed of electromagnetic stacked steel plates each having a fan-like shape. Each core piece 111 is provided, on the inner circumferential side, with one slot SL and two teeth parts 112, as shown in FIG. 10. The outer ring 130 is made of a metal material formed in a cylindrical shape and provided, on its outer periphery, with ribs 131 and bolt holes 131a. The bolt holes 131a are used to mount a motor M to an engine not shown or attach a cover to the motor M.

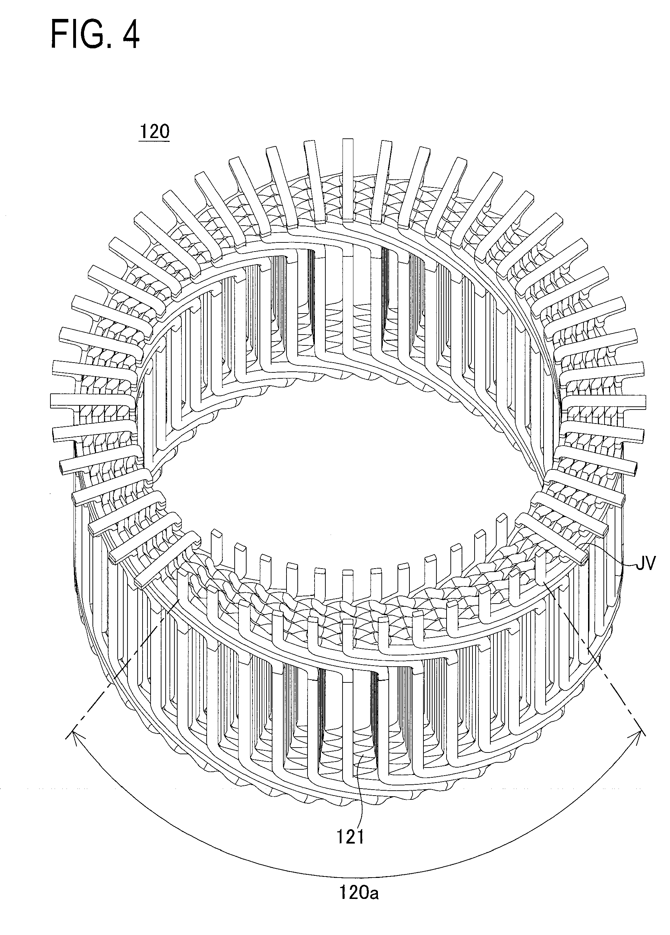

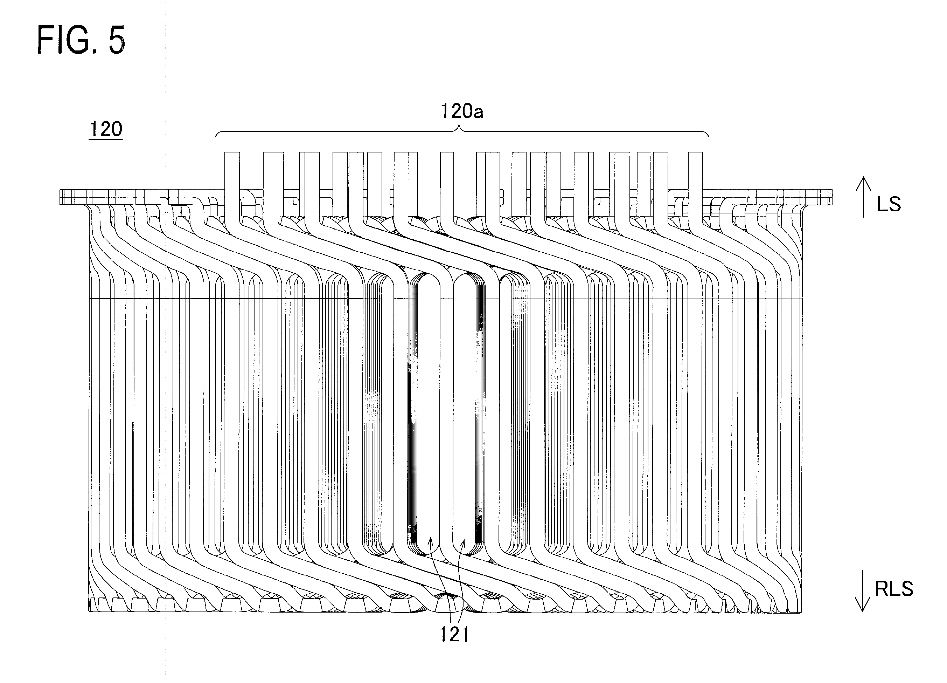

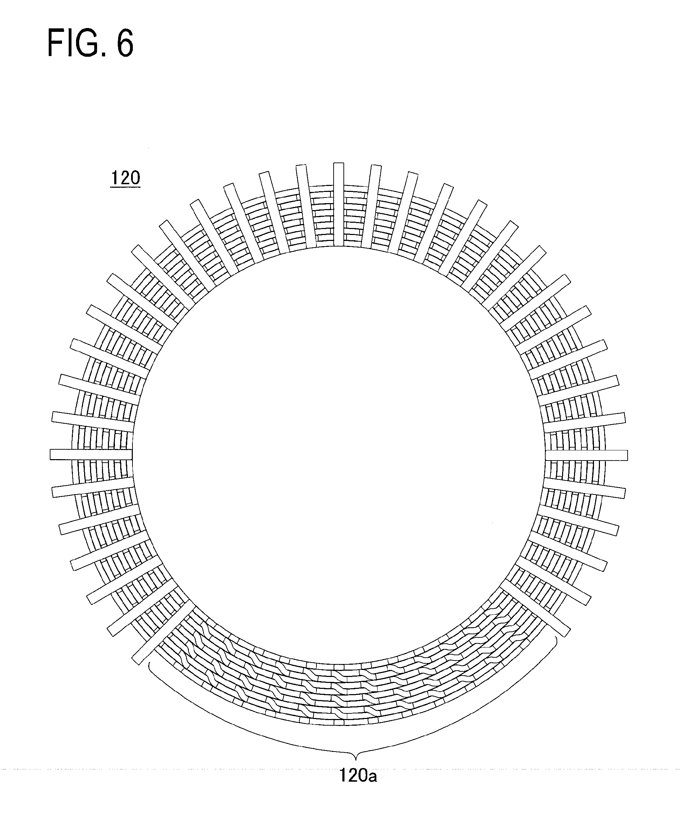

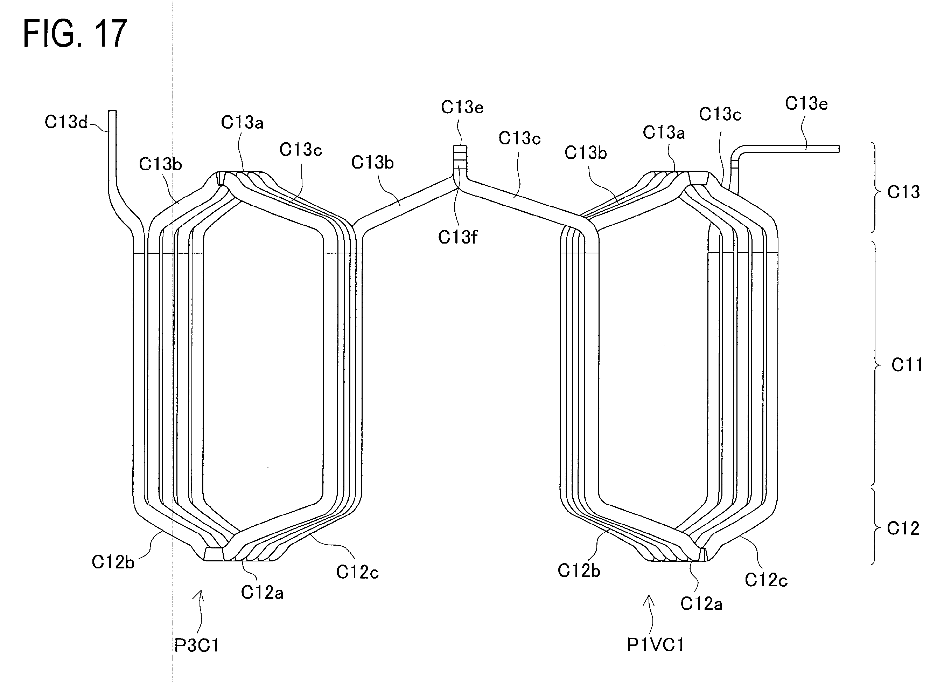

FIG 4 is a perspective view of the cage coil 120. FIG 5 is a side view of the cage coil 120. FIG 6 is a top view of the cage coil 120. The cage coil 120 is formed from forty-eight concentrically wound coils C. The cage coil 120 is formed, on its lead side LS, with joints JV each including a first joint portion C13e and a second joint portion C13f joined to each other as shown in FIGs. 17 to 19 mentioned later. These joints JV are arranged radially on the lead side LS. However, the stator 100 needs joint portions to be coupled with connectors and thus a connector joint section 120a is prepared in which first lead portions C13d are arranged.

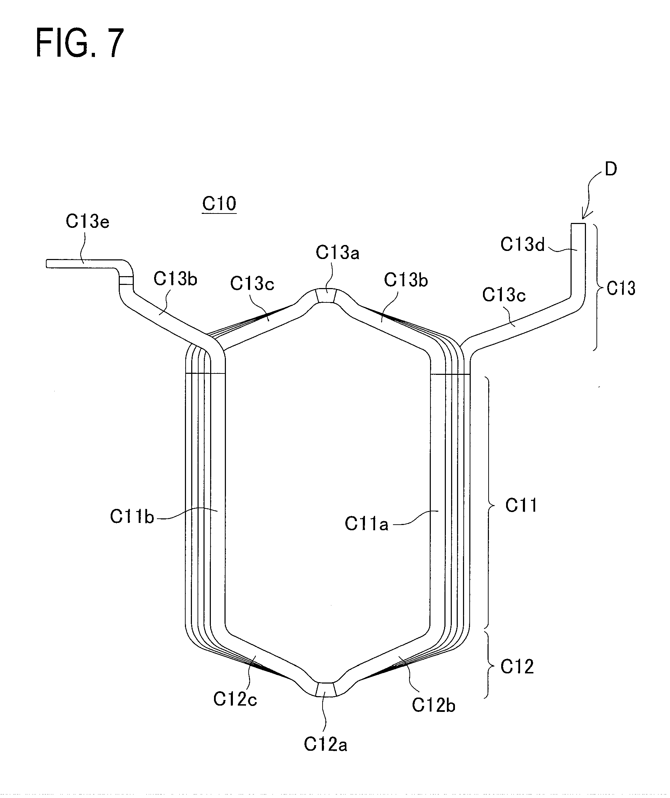

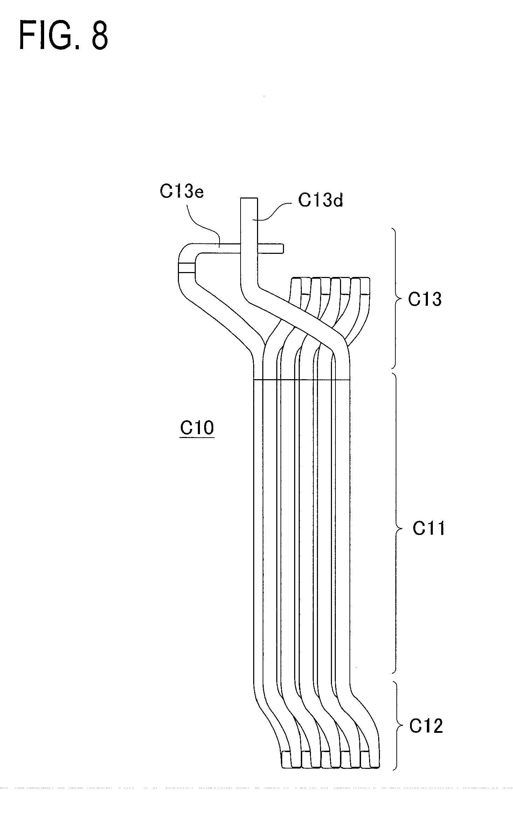

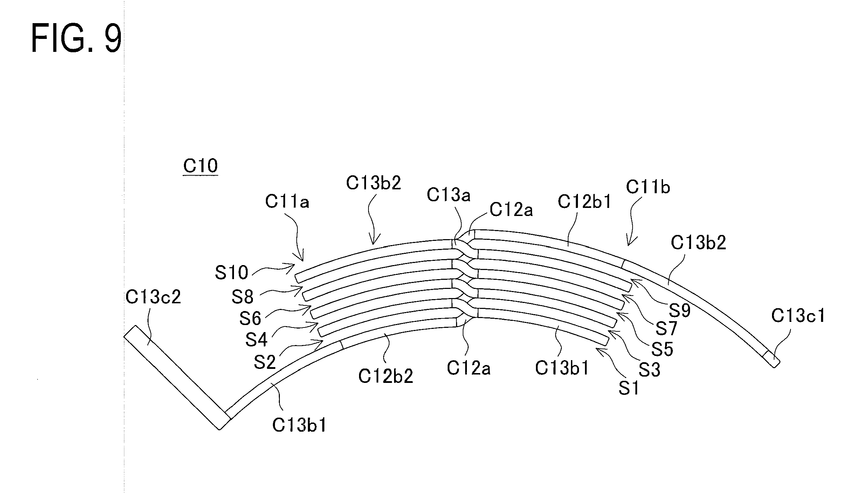

FIG 7 is a front view of the concentrically wound coil C. FIG 8 is a side view of the concentrically wound coil C. FIG 9 is a top view of the concentrically wound coil C. The concentrically wound coil C is a coil made of a flat conductor wire ("flat wire") D wound into an almost hexagonal shape by edgewise bending. Forty-eight concentrically wound coils C are used to constitute the cage coil 120. The flat wire D is a wire made of high-conductive metal such as copper and aluminum and formed to have a rectangular cross section. This wire is coated with an insulating coating material such as enamel. This flat wire D is edgewise bent and wound by five turns to form the concentrically wound coil C. Accordingly, an in-slot wire portion C11 of the coil C has a thickness equal to the total thickness of five stacked wire portions in rectangular cross section of the flat wire D in a short side direction.

The concentrically wound coil C includes three parts, i.e., the in-slot wire portion C11, a non-lead-side coil-end wire portion C12 formed on a non-lead side RLS, a lead-side coil-end wire portion C13 formed on a lead side LS, as shown in FIG 7. The non-lead-side coil-end wire portion C12 includes a lane-change portion C12a, and a first end portion C12b and a second end portion C12c respectively connecting the lane-change portion C12a to the in-slot wire portions C11. The lead-side coil-end wire portion C13 includes a lane-change portion C 13 a, and a first end portion C13b and a second end portion C13c respectively connecting the lane-change portion C13a to the in-slot wire portions C11. At a winding start and a winding end of the concentrically wound coil C, a first lead portion C13d and a first joint portion C13e are formed respectively. In some of the concentrically wound coils C, a second joint portion C13f mentioned later is formed instead of the first lead portion C13d or a first joint portion C13e.

For convenience of explanation, the right and left in-slot wire portions C11 are respectively referred to as first in-slot wire portions C11a and second in-slot wire portions C11b. Thus, each first in-slot wire portion C11a is continuous with the corresponding first end portion C12b and first end portion C13b, while each second in-slot wire portion C11b is continuous with the corresponding second end portion C12c and second end portion C13c.

As shown in FIG 9, the concentrically wound coil C is wound into a circular-arc shape. The in-slot wire portions C11 are formed to generate gaps S each between adjacent flat wires D. In FIG 9, these gaps S are assigned reference numerals for convenience of explanation. Specifically, from the inner circumferential side, there are provided on the right side in the figure a first gap S1, a third gap S3, a fifth gap S5, a seventh gap S7, and a ninth gap S9, while there are provided on the left side in the figure a second gap S2, a fourth gap S4, a sixth gap S6, an eighth gap S8, and a tenth gap S10. The first gap S1 is open on the inner circumferential side and the tenth gap S10 is open on the outer circumferential side. The second gap S2 to the ninth gap S9 are each formed at an interval almost equal to the width of the flat wire D.

Furthermore, as shown in FIG 9, each lane-change portion C12a is cranked radially outwardly from left to right in the figure, while the lane-change portion C13a is cranked radially outwardly from right to left in the figure.

FIG 10 is a cross sectional view showing a state where the concentrically wound coil C is inserted in the stator core 110. This figure illustrates a case in which only one concentrically wound coil C is set in the stator core 110. This coil C is placed so that the in-slot wire portions C11 of the coil C are inserted in the slots SL by skipping the teeth parts 112 of the stator core 110. In each slot SL, an insulator 115 is provided. This insulator 115 is made of a resin material having a high insulating property to ensure insulation between the stator core 110 and the concentrically wound coil C.

For convenience of explanation, the left slot SL in the figure is referred to as a first slot SL1 and the right slot SL is referred to as a seventh slot SL7. When only one concentrically wound coil C is set in the stator core 110, accordingly, the second in-slot wire portions C11b on the left side are inserted in the first slot SL1 and the first in-slot wire portions C11a on the right side are inserted in the seventh slot SL7, so that the right and left in-slot wire portions C11 are arranged by skipping five slots SL.

When the concentrically wound coil C is placed in the stator core 110 as above, the in-slot wire portions C11 are inserted in zigzag or staggered pattern in the slots SL. In other words, the gaps S are generated in five positions in each slot SL and thus five in-slot wire portions C11 are inserted. When the cage coil 120 is actually inserted in the stator core 110, the concentrically wound coils C of the same phase are placed in each gap S so that ten in-slot wire portions C11 are inserted in one slot SL.

Twenty-four pairs of the above concentrically wound coils C are overlapped one on another to produce the cage coil 120 shown in FIGs. 4 to 6. A producing process of this cage coil 120 will be explained below.

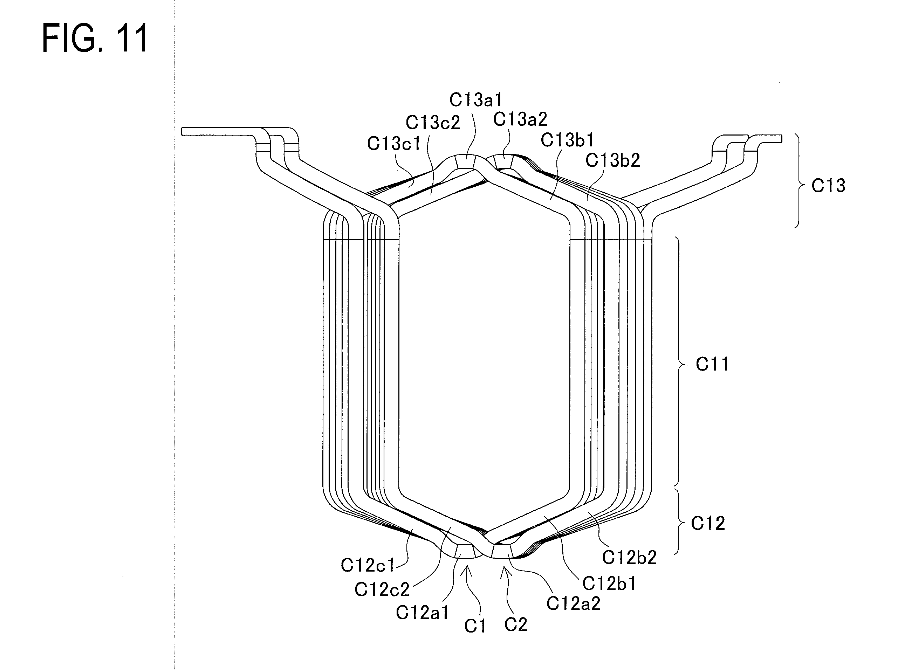

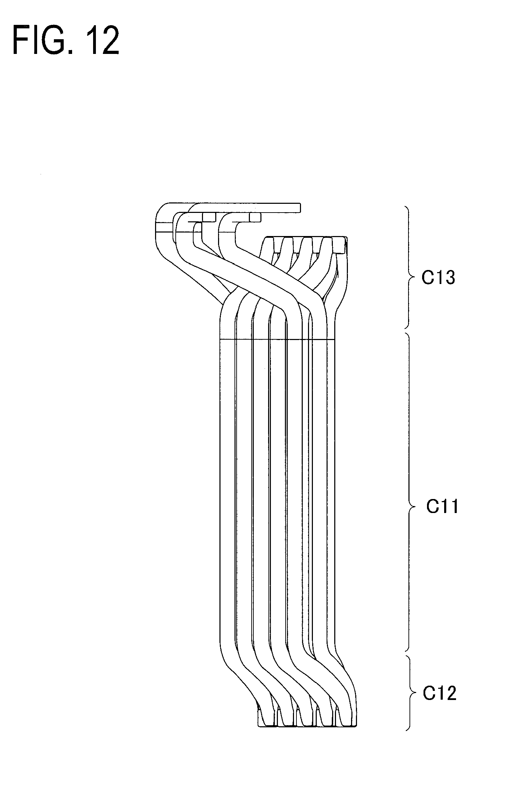

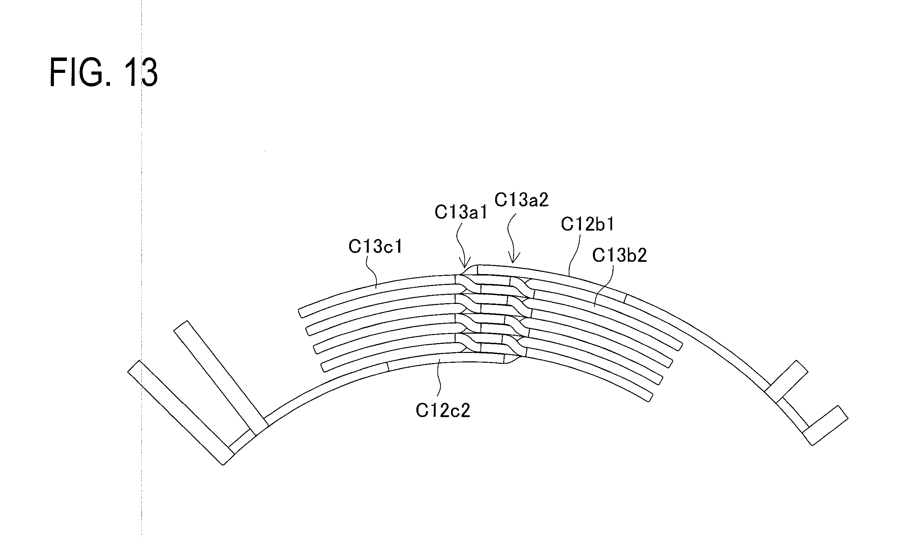

FIG 11 is a front view showing the first concentrically wound coil C1 and the second concentrically wound coil C2 overlapped one on the other. FIG 12 is a side view of the overlapped first and second concentrically wound coils C1 and C2. FIG. 13 is a top view of the overlapped first and second concentrically wound coils C1 and C2.

Since two of the concentrically wound coils C are illustrated in FIG 11, they are referred to as the first concentrically wound coil C1 and the second concentrically wound coil C2 for convenience of explanation, even though they are the concentrically wound coils C wound in the same manner. However, the lead portions of the lead-side coil-end wire portions C 13, e. g., the first lead portions C13d, the first joint portions C13e, and the second joint portions C13f, are formed in different shapes depending on respective positions. The first concentrically wound coil C1 and the second concentrically wound coil C2 are overlapped with a displacement by one slot SL of the stator core 110. Thus, gaps are generated between the in-slot wire portions C11 of the first concentrically wound coil C1 and the in-slot wire portions C11 of the second concentrically wound coil C2 to allow insertion of the insulators 115 and the teeth parts 112.

As a result, on the non-lead-side RLS, the first end portions C12b1 of the first concentrically wound coil C1 and the first end portions C12b2 of the second concentrically wound coil C2 are overlapped in the axial direction of the cage coil 120, and the lane-change portions C12a1 and the lane-change portions C12a2 intersect each other in the axial direction of the cage coil 120 when seen from the inner peripheral side of the stator 100. On the lead-side LS, the first end portions C13b1 of the first concentrically wound coil C1 and the first end portions C13b2 of the second concentrically wound coil C2 are overlapped in the axial direction of the cage coil 120, and the lane-change portions C13a1 and the lane-change portions C13a2 intersect each other in the axial direction of the cage coil 120 when seen from the inner peripheral side of the stator 100. Near these intersecting areas, the non-lead-side coil-end wire portions C12 and the lead-side coil-end wire portions C13 of the adjacent concentrically wound coils C bypass or detour around the opposite flat wires D.

The lane-change portions C13a1 of the first concentrically wound coil C1 and the lane-change portions C13a2 of the second concentrically wound coil C2 are arranged adjacently. The lane-change portions 12a1 of the first concentrically wound coil C1 and the lane-change portions C12a2 of the second concentrically wound coil C2 are arranged adjacently. In this way, the first concentrically wound coil C1 and the second concentrically wound coil C2 are placed in overlapping relation to form the cage coil 120.

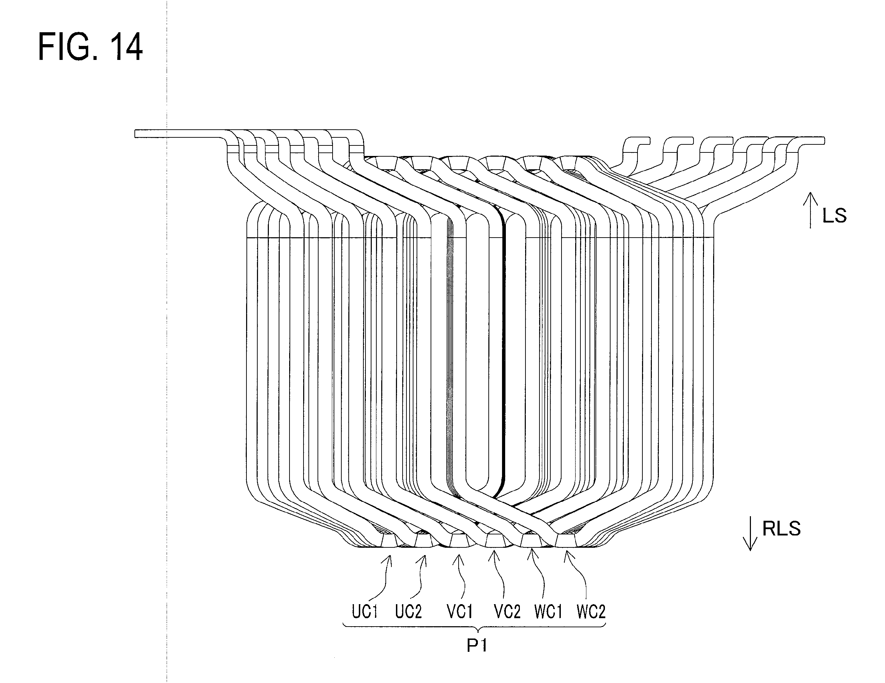

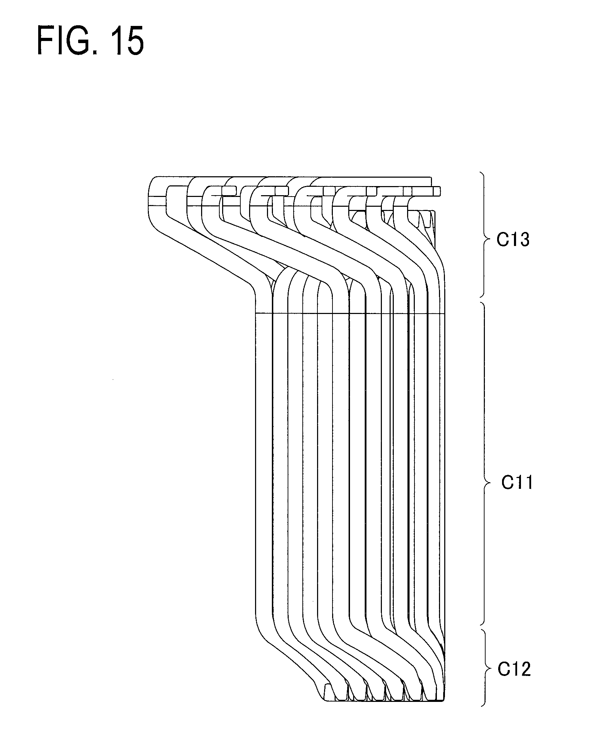

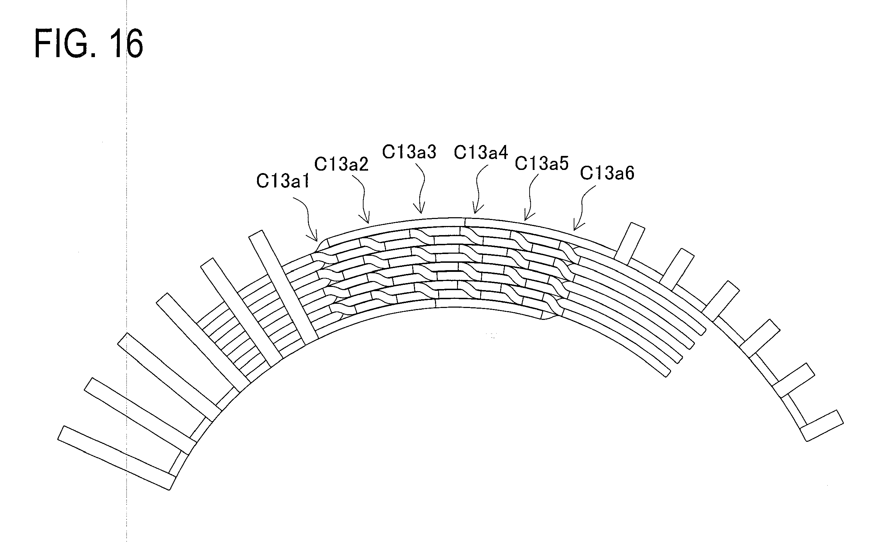

FIG 14 is a front view showing a state where six concentrically wound coils C are overlapped one another. FIG 15 is a side view of the state of the overlapped six concentrically wound coils C. FIG 16 is a top view of the state of the overlapped six concentrically wound coils C. When a plurality of six concentrically wound coils C are sequentially overlapped as shown in FIGs. 11 to 13, a unit shown in FIGs. 14 to 16 is formed.

The stator 100 is composed of three phases, U phase, V phase, and W phase, so that a U1 phase, a U2 phase, a V1 phase, a V2 phase, a W1 phase, and a W2 phase are arranged in this order. For convenience of explanation, they are referred to as a U-phase first coil UC1, a U-phase second coil UC2, a V-phase first coil VC1, a V-phase second coil VC2, a W-phase first coil WC1, and a W-phase second coil WC2. The unit shown in FIGs. 14 to 16 forms one pole, which is referred to as a first pole P1. Eight sets of the above units are assembled to form the cage coil 120.

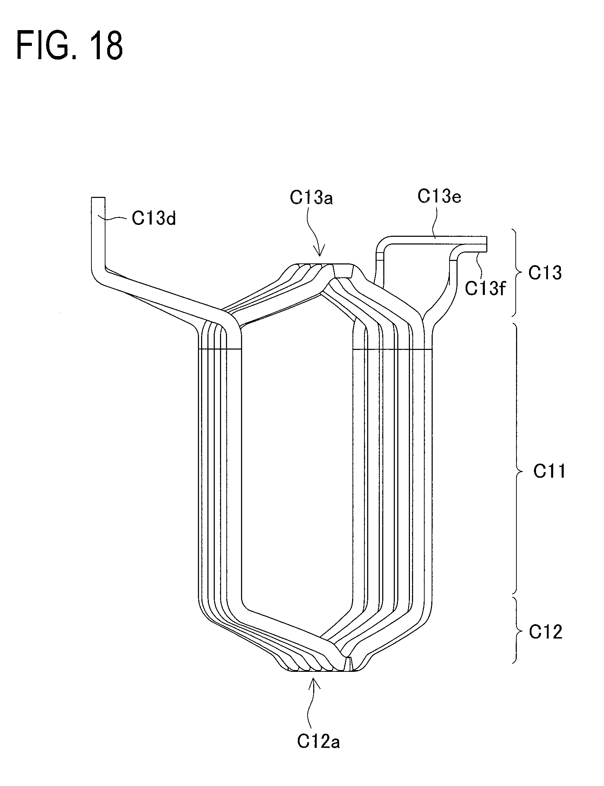

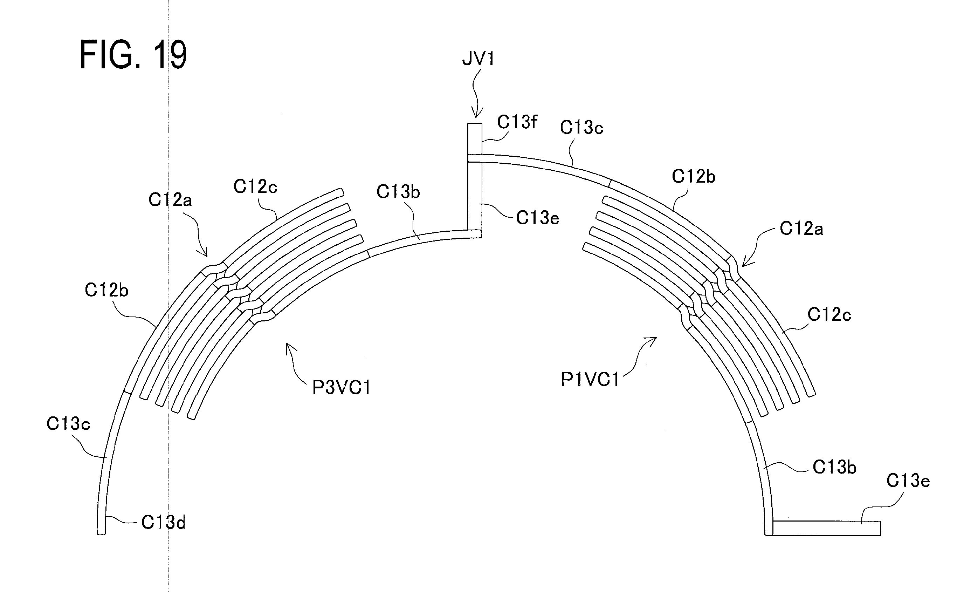

FIG 17 is a front view showing a state where the concentrically wound coils C of the same phase are arranged. FIG 18 is a side view showing the state where the concentrically wound coils C of the same phase are arranged. FIG 19 is a top view showing the state where the concentrically wound coils C of the same phase are arranged. The concentrically wound coils C connected to each other in each phase are illustrated in FIGs. 17 to 19. In the figures, a U-phase first coil UC1 of a first pole P1 is connected to a U-phase first coil UC1 of a third pole P3. To be concrete, a second joint portion C13f extending from the second end portion C13c of the 1^{st}-pole U-phase first coil P1UC1 is connected to a first joint portion C13e extending from the first end portion C13b of a 3^{rd}-pole U-phase first coil P3UC1 to form a U-phase first joint JV1.

As shown in FIG 10 described above, for example, if the second in-slot wire portions C11b of the U-phase first coil US1 of the first pole P1 are inserted in the first slot SL1, the first in-slot wire portions C11a of the 1^{st}-pole U-phase first coil P1UC1 and the second in-slot wire portions C11b of the 2^{nd}-pole U-phase first coil P2UC1 are placed in the seventh slot SL7. On the other hand, the 3^{rd}-pole U-phase first coil P3UC1 is arranged so that its second in-slot wire portions C11b are inserted in a thirteenth slot SL13 not shown and its first in-slot wire portions C 11 a are inserted in a nineteenth slot SL 19 not shown. Accordingly, the U-phase first joint JV1 is formed by the second joint portion C13f connected to the first in-slot wire portion C11a of the 1^{st}-pole U-phase first coil P1UC1 inserted in the seventh slot SL7 and the first joint portion C13e connected to the second in-slot wire portion C11b of the 3^{rd}-pole U-phase fist coil P3UC1 inserted in the thirteenth slot SL13.

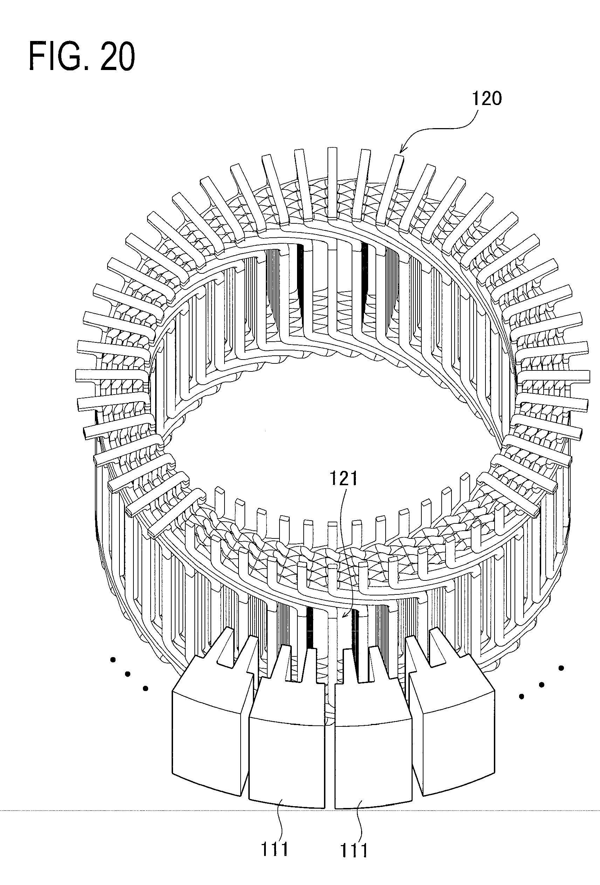

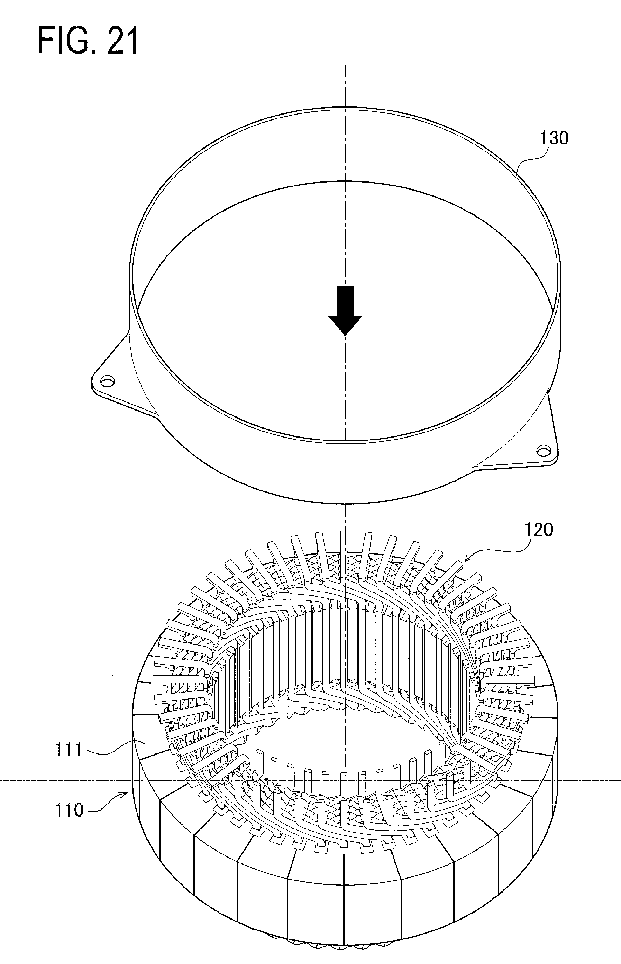

FIG. 20 is a perspective view showing how to insert the core pieces 111 in the cage coil 120. FIG 21 is a perspective view showing how to fit an outer ring on the outer periphery of the stator core 110. The cage coil 120 includes a plurality of slot insertion openings 121 each formed between adjacent in-slot wire portions C11. When the teeth parts 112 of the core pieces 11 are inserted in the slot insertion openings 121 as shown in FIG 20, the core pieces 111 are arranged in an annular form around the cage coil 120. In this state, the outer ring 130 is fitted on the outer periphery of the stator core 110 defined by the core pieces 111 as shown in FIG 21. The outer ring 130 is heated in advance to be widened in inner diameter by metal expansion. When this ring 130 is cooled after fitted on the stator core 110, the core pieces 111 can be held in an annular form.

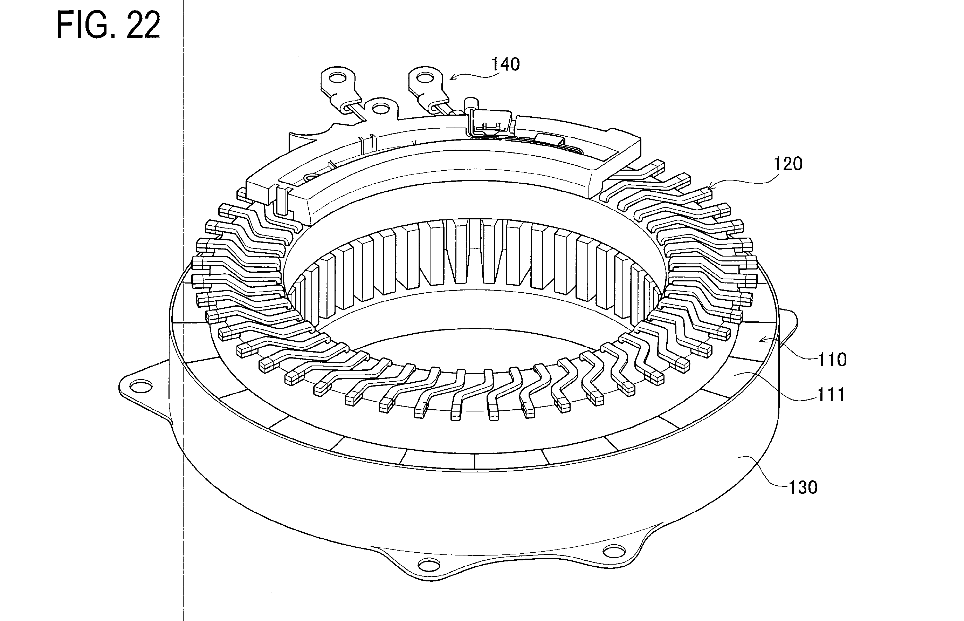

FIG 22 is a perspective view of the stator 100. In the perspective view of the stator 100 in FIG 22, differently from the perspective view of the stator 100 in FIG 1, outside connecting terminal parts 140 are formed in a coil end part. The coil end of the stator 100 on the lead side is joined to bus bars by welding or the like to connect the coils to each other, and also joined to the outside connecting terminal parts 140. These terminal parts 140 are electrically connected to a secondary battery mounted in a vehicle not shown.

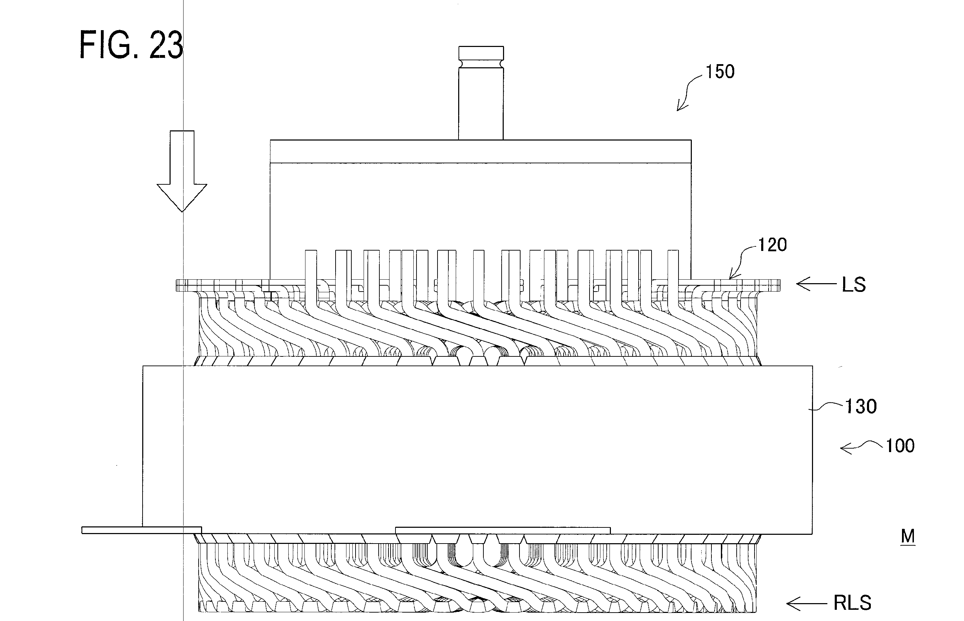

FIG 23 is a side view showing how to insert a rotor 150 in a motor M. In FIG 23, the outside connecting terminal parts 140 are omitted. The concentrically wound coils C are overlapped in sequence as above to form the cage coil 120 shown in FIG 4. The cage coil 120 in an annular form is inserted in the stator core 110, the joints JV are connected by welding, the connector joint section 120a is connected to a connector through bus bars not shown for connection with an external device. Thus, the stator 100 is completed. The rotor 150 is then inserted as shown in FIG 20 to be placed inside the stator 100, so that the motor M is completed. Even though not illustrated, a cover of the motor M is actually provided and the rotor 150 is held through bearings.

The stator 100 of the present embodiment configured as above provides the following operations and effects.

As a first effect, the coil ends of the stator 100 to be used in the motor M can be reduced in size. In the motor M of the present embodiment, the stator 100 includes the concentrically wound coils C each formed of the wound flat wire D to have the in-slot wire portions C11, non-lead-side coil-end wire portions C12, and lead-side coil-end wire portions C13, and the stator core 110 configured as an assembly of split-type core pieces 111 each including the slots SL in which the in-slot wire portions C11 are inserted and the teeth parts 112 formed adjacent to the slots SL. The concentrically wound coils C include the first concentrically wound coil C1 formed in the concentric winding form with the gaps S between the adjacent wound flat wires D to allow insertion of the flat wires D and the second concentrically wound coil C2 wound as with the first concentrically wound coil C 1. In the slot SL, the in-slot wire portions C11 of the first concentrically wound coil C1 and the in-slot wire portions C11 of the second concentrically wound coil C2 are alternately placed. The lane-change portions C12a and the lane-change portions C 13 a formed in the non-lead-side coil-end wire portions C12 and the lead-side coil-end wire portions C13 of the first concentrically wound coil C1 are formed to bypass an area corresponding to the thickness of one flat wire D forming the non-lead-side coil-end wire portion C12 or the lead-side coil-end wire portion C13 of the second concentrically wound coil C2.

In the stator 100 to be used in the motor M, the lane-change portions C12a are formed in the non-lead-side coil-end wire portion C12 and the lane-change portions C13a are formed in the lead-side coil-end wire portions C13. These lane-change portions C12a and C13a are formed to bypass an area corresponding to the thickness of one flat wire D. In other words, the flat wire D is bent for lane change by a width of a short side of the rectangular cross section of the flat wire D.

Each concentrically wound coil C is formed by winding the flat wire D in five turns. In a conventional art, therefore, the flat wire D has to be bent in a flatwise bending direction by an amount about five times the width of the short side of the rectangular cross section of the flat wire D to form a lane-change portion. Accordingly, this needs the width corresponding to the lane-change portions formed in the circumferential direction of the stator 100. However, the minimum bending radius of the flat wire D depends on the width thereof and thus the lane-change portions located on a more outer side is subjected to a more undesirable condition. This is not to say that the width as large as five times the flat wire D is simply enough. Actually, the width plus some extra is needed in the circumferential direction of the stator 100.

However, in each concentrically wound coil C of the present embodiment, the lane-change portion C12a and the lane-change portion C13a are configured to bypass an area corresponding to the width of one flat wire D. This can reduce the width of the portions of the adjacent concentrically wound coils C to be formed as the lane-change portions C12a and C13a. For this purpose, it is only necessary to form the lane-change portions C12a and C13a so as to detour around the area corresponding to the width of one flat wire D. Since the lane-change portions C12a and C13a of the same concentrically wound coil C have gaps between the adjacent flat wires D, there is a space enough to form the lane-change portions.

As a result, the lane-change portions C12a and C13a are less limited in the width direction. The limitation in width of the stator 100 in the circumferential direction has an influence on the number of turns of the concentrically wound coil C, the width of the flat rectangular wire in the short side direction, and others. Accordingly, for the purpose of increasing the output power of the motor M, when studies are made on increasing the cross sectional area of the flat rectangular wire, for example, increasing the number of turns of each concentrically wound coil C or widening the width of the flat rectangular wire in the short side direction, it is necessary to review addition of a space for the lane-change portions by stacking or overlapping the flat wires in the axial direction of the stator 100 depending on the design requirements. In each concentrically wound coil C of the present embodiment, such a condition is relaxed, thus enabling realization of compact size of the non-lead-side coil-end wire portions C12 and the lead-side coil-end wire portions C13. Consequently, the concentrically wound coils C can contribute to shortening of the height of the coil ends of the stator 100 in the axial direction.

Another effect is the improved assembling easiness of the motor M. For the motor M in the present embodiment, the concentrically wound coils C having the same shape are overlapped in sequence to form the cage coil 120. Accordingly, the stator 100 can be more easily produced than in the case of using the wave winding coil needing to be formed by assembling two or more coils as disclosed in Patent Documents 3 and 4. Thus, the assembling easiness of the motor M can be improved. On the other hand, the height of the coil ends in the axial direction can also be shortened as described above.

Since the split type stator core 110 is used for the stator 100, the core pieces 111 are assembled from the outer periphery side of the cage coil 120 without forcibly deforming the cage coil 120, and the core pieces 111 are held by the outer ring 130, thus forming the stator 100. In this way, the stator 100 can be easily assembled. It is also conceivable to use a one-piece stator core 110 for the stator 100. However, the concentrically wound coils C have to be assembled first into a cylindrical shape as with the cage coil 120 and then assembled with the stator core 110, so that simple assembling is difficult and a complicated assembling work may be needed. Accordingly, when the split type stator core 110 is used, even though it causes larger iron loss than in the case of using the one-piece stator core 110, assembling of the stator 100 can be made easy. This can contribute to enhancement of productivity of the motor M.

The present invention is explained in the above embodiment but is not limited thereto. The invention may be embodied in other specific forms without departing from the essential characteristics thereof.

For instance, the present embodiment uses forty-eight stator cores 110 to constitute an eight-pole motor M. However, the number of slots is a design matter and thus can be changed within the scope of design. The detailed shape of the concentrically wound coil C can also be changed within the scope of the invention.

### REFERENCE SIGNS LIST

- 100: Stator
- 110: Stator core
- 111: Core pieces
- 111a: Bolt hole
- 112: Teeth part
- 115: Insulator
- 120: Cage-shaped coil
- 120a: Connector joint section
- 150: Rotor
- C: Concentrically wound coil
- C1: First concentrically wound coil
- C2: Second concentrically wound coil
- C11: In-slot wire portion
- C12: Non-lead-side coil-end wire portion
- C13: Lead-side coil-end wire portion
- D: Flat rectangular wire
- JV: Joint
- JV1: U-phase first joint
- LS: Lead side
- M: Motor
- RLS: Non-lead side
- S: Gap
- SL: Slot

## Claims

1. A stator including: coils each made of a conductor wire wound to form in-slot wire portions and coil-end wire portions; and a split-type stator core including slots receiving the in-slot wire portions and teeth parts formed adjacent to the slots,
wherein the coils includes:
a first concentrically wound coil formed in a concentric winding shape to have gaps between adjacent portions of the wound conductor wire to allow insertion of the conductor wire; and
a second concentrically wound coil wound as with the first concentrically wound coil,
wherein the in-slot wire portions of the first concentrically wound coil and the in-slot wire portions of the second concentrically wound coil are alternately arranged in each slot, and
a lane-change portion is formed in the coil-end wire portion of the first concentrically wound coil to bypass an area corresponding to a width of one conductor wire used for the coil-end wire portion of the second concentrically wound coil.

2. A method for manufacturing a stator by winding conductor wires to form coils each including in-slot wire portions and coil-end wire portions, arranging the coils to form a cage-shaped coil, inserting a split-type stator core including teeth parts and slots into the cage-shaped coil to form a nearly annular stator,
wherein the method includes:
forming the coil in a concentric winding shape to have gaps between adjacent portions of the conductor wire to allow insertion of another one of the conductor wires, and forming lane-change portions in the coil-end wire portions to bypass an area corresponding to a width of one conductor wire;
forming an annular cage-shaped coil from the coils so that in-slot wire portions of a first concentrically wound coil and in-slot wire portions of a second concentrically wound coil placed adjacent to the first concentrically wound coil are inserted in mutual gaps and alternately arranged; and
inserting the teeth parts of the stator core in the cage-shaped coil from an outer periphery side of the cage-shaped coil to form the stator.
